# EUROPÄISCHE PATENTANMELDUNG

(11) **EP 0 643 091 A1**
(43) Veröffentlichungstag der Anmeldung: **15.03.1995**
(21) Anmeldenummer: 94113840.6
(22) Anmeldetag: 03.09.1994
(51) Int. Cl.: C08J 5/24, B29C 70/14

(54) **Flächiges Halbzeug**

(30) Priorität: 11.09.1993 DE 4330860
(71) Anmelder: BASF Aktiengesellschaft, D-67063 Ludwigshafen (DE)
(72) Erfinder: Schlarb, Alois, Dr., D-67227 Frankenthal (DE); Hofmann, Jürgen, D-67069 Ludwigshafen (DE); Ohlig, Hilmar, D-67657 Kaiserslautern (DE); Ittemann, Peter, Dr., D-68623 Lampertheim (DE)

(57) **Zusammenfassung**

Die Erfindung betrifft ein flächiges Halbzeug aus glasmattenverstärkten Thermoplasten, bei dem mehr als 50 Gew.-% der Glasfasern eine Länge von mehr als 2 mm und mehr als 5 Gew.-% eine Länge von weniger als 2 mm haben, aber praktisch keine Fasern länger als 50 mm sind, sowie ein Verfahren zur Herstellung dieses Halbzeugs, bei dem Thermoplast und Glasfasern extrudiert und eine flächige Bahn geformt wird.

## Beschreibung

Die Erfindung betrifft ein flächiges Halbzeug aus glasmattenverstärkten Thermoplasten (GMT) sowie ein Verfahren zu seiner Herstellung durch Extrusion von Thermoplast und Glasfasern und Formen zu einer flächigen Bahn.

Bauteile aus GMT, insbesondere aus glasmattenverstärktem Polypropylen finden in zunehmendem Maße Anwendung im Automobilbau.

Ein gebräuchliches Verfahren zur Herstellung von GMT ist die Schmelzeimprägnierung. Dabei werden mehrerere Lagen von Glasfasermatten und Thermoplastschmelze-Bahnen kontinuierlich, vorzugsweise in einer Doppelbandpresse, laminiert und unter Druck abgekühlt. Derartige Verfahren sind z.B. in DE-B 23 12 816 und DE-B 29 48 235 beschrieben. Man setzt dabei Fasermatten ein, die aus Endlosfasern oder aus Schnittfasern einer Länge von 50 bis 100 mm bestehen. Um ein fließfähiges Halbzeug zu erhalten, können die Matten genadelt werden, wobei ein Teil der Fasern senkrecht zur Bahnrichtung orientiert wird und ein geringer Anteil der Glasfasern zerbrochen wird (s. z.B. DE-B 30 29 442). Das Schmelzeimprägnierverfahren ergibt zwar ein hervorragend verarbeitbares Halbzeug, aus dem Fertigteile mit guten mechanischen Eigenschaften hergestellt werden können, es ist technisch aber sehr aufwendig.

Bei einem anderen Verfahren geht man nach dem Prinzip der Papierherstellung von einem aufgeschwemmten Brei aus Wasser, Thermoplastpulver und Schnittglasfasern aus, der auf einem Sieb abgestrichen, verdichtet und getrocknet wird. Es werden Glasfasern mit einer einheitlichen Länge von 12,7 bzw. 25,4 mm eingesetzt. Derartige Verfahren sind z.B. in EP-A 39 292, EP-A 71 219 und EP-A 148 761 beschrieben. Das Herstellverfahren ist wegen des Trocknungsprozesses sehr energieaufwendig, die aus dem Halbzeug hergestellten Fertigteile weisen für viele Einsatzzwecke eine unbefriedigende Zähigkeit auf.

Der Erfindung lag daher die Aufgabe zugrunde, ein einfach und billig herstellbares, flächiges Halbzeug bereitzustellen, welches gut verarbeitbar ist und zu Fertigteilen mit befriedigenden mechanischen Eigenschaften umgeformt werden kann.

Gegenstand der Erfindung ist ein flächiges Halbzeug aus glasmattenverstärkten Thermoplasten, welches 40 bis 80 Gew.-% Thermoplast und 60 bis 20 Gew.-% Glasfasern enthält, wobei mehr als 50 Gew.-% der Glasfasern eine Länge von mehr als 2 mm, mehr als 5 Gew.-% eine Länge von weniger als 2 mm und praktisch keine Glasfasern eine Länge von mehr als 50 mm haben, und daß die Fasern im wesentlichen nur in zwei Dimensionen angeordnet sind.

Ein weiterer Gegenstand der Erfindung ist ein Verfahren zur Herstellung dieses flächigen Halbzeugs, bei dem man Thermoplast und Glasfasern einer Länge von mehr als 10 mm einem Extruder zuführt und dort vermischt, durch eine Düse auspreßt und zu einer flächigen Bahn formt, die gegebenenfalls beidseitig mit einem Faservlies kaschiert wird.

Die Extrusion von glasfaserhaltigen Thermoplasten zu Profilen und Bahnen wurde zwar bisher schon praktiziert, dabei werden aber stark scherende Extruder verwendet, so daß die Glasfasern auf Faserlängen unterhalb von l mm zerkleinert werden, und keinen Zusammenhalt des erhaltenen Halbzeugs bei der Weiterverarbeitung bewirken können.

Das erfindungsgemäße flächige Halbzeug enthält 40 bis 80 Gew.-% Thermoplast und 60 bis 20, vorzugsweise 50 bis 25 Gew.-% Glasfasern. Als Thermoplasten sind Polyolefine, Styrolpolymere, Polyamide, gesättigte Polyester, Polycarbonate, Polyetherimide, Polyetherketone und Polyethersulfone geeignet. Bevorzugt ist ein Propylenhomopolymerisat mit einem Schmelzindex MFI zwischen 5 und 500, insbesondere zwischen 50 und 400 [g/10 min], sowie Polypropylen-Pfropfpolymerisate, z.B. mit Acrylsäure. Das Halbzeug kann darüber hinaus übliche Zusatzstoffe, wie Stabilisatoren, Füllstoffe, Farbstoffe, Flammschutzmittel und Haftvermittler enthalten.

Bei der Fertigung des flächigen Halbzeugs geht man entweder von Endlos-Glasfaserrovings oder von Schnittglasfasern aus, die beispielsweise 13.5 mm lang sind. Diese Fasern können nun entweder zusammen mit dem Thermoplast-Granulat bzw. -Pulver in den Einzugsteil des Extruders zugegeben werden oder sie werden in die Thermoplastschmelze stromabwärts über eine Dosierschnecke oder einen Einfüllstutzen zugeführt.

An dieser Stelle können auch weitere Additive, z.B. Stabilisatoren, Nucleierungsmittel und Füllstoffe zugesetzt werden.

Im Extruder wird der Thermoplast plastifiziert und mit den restlichen Komponenten innig vermischt. Die Extrusion wird so durchgeführt, daß die Glasfasern nicht zu stark zerkleinert werden. Dies wird erreicht, wenn man schwach scherende Ein- oder Mehrwellenextruder verwendet, vorzugsweise gleichsinnig drehende Zweiwellenextruder, wobei die Schnecken im Gegensatz zum üblichen Aufbau (z.B. für eine Compoundierung) im wesentlichen nur schwach scherende Elemente aufweisen.

Nach der Extrusion weisen mehr als 50 Gew.-% der Glasfasern eine Länge von mehr als 2 mm auf, mehr als 5 Gew.-% eine Länge von weniger als 2 mm, und praktisch keine Fasern sind länger als 50 mm. Eine bevorzugte Faserlängenverteilung ist:
- mehr als 50 Gew.-% 2 bis 10 mm
- mehr als 5 Gew.-% länger als 10 mm
- mehr als 10 Gew.-% kürzer als 2 mm,
- keine Fasern länger als 50 mm.

Nach der Plastifizierung und Zerkleinerung im Extruder wird die Masse durch eine Düse ausgepreßt, und zwar entweder durch eine Breitschlitzdüse direkt zu einer flächigen Bahn oder durch eine Runddüse zu einem Strang, der dann anschließend zu einer flächigen Bahn verformt wird. In dieser Bahn berühren und überschneiden sich die relativ langen Glasfasern, so daß man von einer Glasmatte sprechen kann. Die endgültige Formgebung geschieht mittels eines Kalanders, eines Glättwerks, durch Walzen oder vorzugsweise auf einer Doppelbandpresse. Dabei kann gegebenenfalls beidseitig ein Faservlies, vorzugsweise aus Glasfasern oder Papier, mit einem Flächengewicht von 20 bis 50 g·m⁻² aufkaschiert werden, wodurch die flächige Bahn an Stabilität gewinnt und die Oberfläche optisch sowie für eine weitere Veredlung verbessert wird. Das erfindungsgemäße Halbzeug hat vorzugsweise eine Breite von 60 bis 500 cm, insbesondere von 80 bis 150 cm, eine Dicke von 1,0 bis 6 mm, insbesondere von 2 bis 4 mm, und ein Flächengewicht von 1000 bis 10 500 g·m⁻², insbesondere von 2000 bis 7000 g·m⁻².

Ein weiteres Charakteristikum des erfindungsgemäßen flächigen Halbzeug ist, daß die Glasfasern im wesentlichen nur in zwei Dimensionen, d.h. nur in der Bahnebene angeordnet sind, wobei sie vorzugsweise mindestens in einem Teilbereich der Bahn senkrecht zur Bahnrichtung eine Vorzugsorientierung aufweisen. Unter Orientierung ist keine exakt parallele Anordnung der einzelnen Fasern zu verstehen; es handelt sich vielmehr um eine Vorzugsrichtung, so daß noch eine Berührung und Überschneidung der einzelnen Fasern auftreten kann. Die Orientierung ist allerdings so stark, daß die aus dem Halbzeug hergestellten Fertigkeiten stark anisotrope mechanische Eigenschaften aufweisen.

Die Faserorientierung entsteht beim Auspressen bzw. beim Kalandrieren der Halbzeugbahn. Beim Auspressen durch eine Breitschlitzdüse erhält man eine Kern/Mantel-Struktur mit einer Faserorientierung im Kern senkrecht zur Bahnrichtung und im Mantel parallel dazu, wobei die Dicke von Kernschicht zu den Mantelschichten zwischen 70 : 30 und 50 : 50 schwanken kann. Beim Umformen des Extrudats im Walzenspalt eines Kalanders wird ebenfalls eine Faserorientierung senkrecht zur Bahnrichtung erzeugt und zwar auch dann, wenn vorher die Extrusion aus einer Runddüse erfolgte.

Das erfindungsgemäße Halbzeug kann nach den üblichen GMT-Verarbeitungsverfahren zu Fertigteilen umgeformt werden. Dazu wird es zunächst über den Erweichungspunkt des Thermoplasten aufgeheizt, was z.B. durch Infrarotaufheizung, Umluftheizung oder Kontaktheizung erfolgen kann. Da die Fasern im Halbzeug im wesentlichen nur in einer Ebene angeordnet sind, quillt das Halbzeug beim Aufheizen in wesentlich geringerem Maße auf als herkömmliches GMT. Dadurch bietet es auch weniger Oberfläche für den Luftzutritt und eine dadurch bedingte Schädigung der Thermoplastmatrix durch Sauerstoff. Das Halbzeug weist bei der Umformung eine bessere Fließfähigkeit auf als gewöhnliches handelsübliches GMT-Halbzeug, so daß der Energieaufwand beim Verpressen geringer ist. Die Fertigteile zeigen befriedrigende mechanische Eigenschaften, insbesondere ein hohes Steifigkeitsniveau.

### Beispiel

### Beispiel 1

Einem gleichsinnig drehenden Zweiwellenextruder (Hersteller Berstorff, Hannover, Typ ZE 40) wurde Polypropylen-Granulat mit einem Massestrom von 7 kg/h zugeführt und bei 230°C mit stromabwärts zugeführten Glasfaserrovings von 1200 Tex vermischt, durch eine Düse ausgetragen, in einem Walzenspalt auf 3,8 mm Dicke kalibriert und auch dort mit einem Glasvlies mit einem Flächengewicht von 25 g/m² kaschiert. Das Halbzeug weit einer Kern/Mantel-Struktur auf, wobei die Fasern im Kern eine Vorzugsorientierung senkrecht zur Bahnrichtung aufweisen und in den Deckschichten vorzugsweise in Bahnrichtung orientiert sind. Der Kernanteil beträgt 70 Vol.-%. Je 15 Vol.-% bilden die Deckschichten. Die Fasern weisen im Kern eine Verteilung mit 10 Gew.-% kleiner als 2 mm, 80 Gew.-% zwischen 2 und 10 mm und 10 Gew.-% größer als 10 mm auf. Die gleiche Verteilung ist im Mantel zu finden.

Das Halbzeug wurde in einem Umluftofen aufgeheizt und in einer hydraulischen Presse bei einer Werkzeugtemperatur von 60°C zu Prüfplatten verpreßt. Die Preßarbeit beträgt 400 Nm. Die Umformung wurde in einer Kavität von 210 mm x 210 mm bei einem Umformgrad von 1,9 vorgenommen.

Das Fertigteil hat einen Elastizitätsmodul nach EN 61 von 4300 MPa, eine Zugfestigkeit von 60 MPa bei einer Bruchdehnung von 2 %.

### Beispiel 2

Einem gleichsinnig drehenden Zweiwellenextruder (Hersteller Berstorff, Hannover, Typ ZE 40) wurde Polyamid 6 mit einem Massestrom von 7 kg/h zugeführt und bei 290°C mit stromabwärts zugeführten Glasfaserrovings von 1200 Tex vermischt, durch eine Düse ausgetragen, in einem Walzenspalt auf 3,8 mm Dicke umgeformt und auch dort mit einem Glasvlies mit einem Flächengewicht von 25 g/m² kaschiert. Das Halbzeug weist eine Vorzugsorientierung der Glasfasern senkrecht zur Bahnrichtung auf. Die Fasern zeigen eine Verteilung mit 10 Gew.-% kleiner als 2 mm, 80 Gew.-% zwischen 2 und 10 mm und 10 Gew.-% größer als 10 mm.

Das Halbzeug wurde in einem Umluftofen aufgeheizt und 2 Zuschnitte unter 0° und 90° zur Bahnrichtung in einer hydraulischen Presse bei einem Werkzeugtemperatur von 110°C zu Prüfplatten verpreßt. Die Preßarbeit beträgt 300 Nm. Die Umformung wurde in einer Kavität von 210 mm x 210 mm bei einem Umformgrad von 1,9 durchgeführt.

Das Fertigteil hat einen Elastizitätsmodul nach EN 61 von 7500 MPa, eine Zugfestigkeit von 90 MPa bei einer Bruchdehnung von 1,8 %.

## Patentansprüche

1. Flächiges Halbzeug aus glasmattenverstärkten Thermoplasten, welches 40 bis 80 Gew.-% Thermoplast und 60 bis 20 Gew.-% Glasfasern enthält, dadurch gekennzeichnet, daß mehr als 50 Gew.-% der Glasfasern eine Länge von mehr als 2 mm, mehr als 5 Gew.-% eine Länge von weniger als 2 mm und praktisch keine Glasfasern eine Länge von mehr als 50 mm haben, und daß die Fasern im wesentlichen nur in zwei Dimensionen angeordnet sind.

2. Flächiges Halbzeug nach Anspruch 1, dadurch gekennzeichnet, daß die Glasfasern mindestens in einem Teilbereich der Halbzeugbahn eine Vorzugsorientierung senkrecht zur Bahnrichtung aufweisen.

3. Verfahren zur Herstellung des flächigen Halbzeugs nach Anspruch 1, dadurch gekennzeichnet, daß man Thermoplast und Glasfasern einer Länge von mehr als 10 mm einem Extruder zuführt und dort vermischt, durch eine Düse auspreßt und zu einer flächigen Bahn formt, die gegebenenfalls beidseitig mit einem Faservlies kaschiert wird.
